# EUROPEAN PATENT SPECIFICATION

(11) **EP 0 573 438 B1**
(45) Date of publication and mention of the grant of the patent: **20.05.1998**
(21) Application number: 92903628.3
(22) Date of filing: 31.01.1992
(51) Int. Cl.: G07F 7/10

(54) **NON-CONTACTING TRANSACTION SYSTEM**
KONTAKTLOSES TRANSAKTIONSSYSTEM
SYSTEME DE TRANSACTION SANS CONTACT

(30) Priority: 31.01.1991 GB 9102104
(43) Date of publication of application: 15.12.1993
(73) Proprietor: INTERNATIONAL TRANSACT SYSTEMS LIMITED, Livingston (GB)
(72) Inventor: Tait, Robert Alan Reid, Bathgate, West Lothian EH48 3DW (GB); Tait, Elizabeth Mary, Bathgate, West Lothian EH48 3DW (GB)
(74) Representative: Naismith, Robert Stewart
(86) International application number: GB9200181
(87) International publication number: WO9214222

(56) References cited:
- EP-A- 0 159 539
- EP-A- 0 174 016
- EP-A- 0 402 182
- WO-A-86/03869
- GB-A- 2 192 665
- US-A- 4 601 011
- US-A- 4 757 185
- US-A- 4 800 543

## Description

The present invention relates to apparatus for logging data of transactions and particularly, but not exclusively, the invention relates to apparatus for recording cashless financial transactions.

It is now widely accepted that purchasing goods or services in the domestic sector is more efficiently carried out if the purchase transaction does not use cash. Cash is often perceived as, at best, cumbersome and, at worst, an unnecessary risk to personal safety, for example, from muggings and also financially, from theft. Current trends are to move towards a "cashless society" and the momentum of this trend is gaining the support nationally and internationally.

The existence of credit cards goes quite a long way to meet the ideal requirements in respect of cashless transactions. For example, it contains the owner's identity number imprinted on a magnetic strip on the back of the card, together with the owner's name embossed on the front of the card. A holograph of the owner's signature is written on the back of the card and is the only means of confirming the correct ownership of the card.

Nevertheless, the present type of credit card has severe limitations in providing the ideal solution for a cashless transaction. For such a transaction to commence, the credit card must physically come into contact with either a paper voucher on which the embossed details are transferred by carbon copy or the card must be physically passed through a swipe machine so that the magnetic strip is electro-magnetically read by a magnetic head. Both of these techniques require intimate physical contact of a machine with a credit card. The next step in the transaction is for the owner of the credit card to append his signature on the paper voucher. The vendor in the transaction compares, or should compare, the signature on the back of the card with that on the voucher. Assuming that there is a fair degree of resemblance between the signatures, the vendor then accepts that the transaction is complete. In order for the card owner's account to be debited, the vendor either sends copies of the carbon slips to the credit card company or the information from the magnetic swipe reader is electronically stored and usually transmitted over a telephone link. In the former case, one of the problems is loss of credit card slips or even damage to the slips such as to render details of the credit card unusable, with the result that the owner's account does not get debited and this results in a loss to the vendor. In the case of a card swipe machine, the information is periodically scanned from a central computer which polls all the swipe machines to which it is linked and the details of the transaction are then fed to a central storage location where the information is then entered into the user's account and a bill is then prepared and sent to the user.

One problem with the existing system is that card fraud is very easily perpetrated. This is mainly because the signature appears on the reverse side of the card. A signature can generally be perfected by repeated copying so that it appears similar to that on the card. The unauthorised user of the card can then forge the signature to complete a fraudulent transaction. Even if a stolen or lost card is reported, there is often considerable time before all premises and businesses accepting that type of card are notified. In the case of a swipe card, notification is carried out remotely and periodically over the telephone line. Nevertheless, a professional criminal is able to verify the card is still valid with minimal risk and to use the card on a day-to-day basis with minimal risk of being apprehended.

A further disadvantage of existing credit card systems is that it is not possible to use the card without physical contact. Therefore, it is not presently feasible to use a credit card for parking, for paying tolls on a toll road or bridge or the like and in such situations, cash is still the preferred method of payment.

There is described in US4,300,543 a transaction system in which a user communicates with a reader unit via a wrist watch. Signals are transmitted via ultrasonic or infrared transmissions. Each of the reader unit and the wrist watch comprise a transmitter and a receiver to permit bidirectional communication to occur.

WO86/03869 describes a transaction system having a portable data handling device which, when it is desired to conduct a transaction, is physically connected to a main transaction terminal. Communication between the data handling device and the terminal is bidirectional.

According to the present invention, there is provided a non-contacting transaction system comprising;
a transmitter unit having a memory for storage of data identifying the user therein, and a transmitter for transmitting the stored data to a remote location upon actuation of the transmitter means by the user; and
receiver means for receiving the transmitted data and also having indicator means for indicating that the data transmitted is received and that the transaction can proceed,
characterised in that the transmitter unit has no receiver to receive data from a remote location whereby the transmitter unit only transmits data to the receiver means and the receiver means has no transmitter for transmitting data to the transmitter unit.

In a preferred arrangement, the transmitter contains the user's code and has a keypad for the user to insert a personal identification number (PIN) code. The receiver is coupled via a transmission line to a local system where the user's code and PIN number and details of the purchase, received from the vendor, are registered against the user's number so that billing can be carried out subsequently.

The receiver can include a means for checking and for rectifying the correctness of the code and PIN number prior to transmitting the data via the modem to the central system. The device is flexible and the PIN number could be required for all transactions to minimise fraud. Each transmitter may be provided with a terminal to allow an input to the memory for changing details of the user's account and charge number. To prove ownership of the transmitter, the owner's name, telephone number, car registration number etc. may also be fused in the memory along with the credit card number. This information would be displayed only to the vendor who could ask the person who was using the transmitter to identify himself by name, PIN, telephone number or car registration as proof of identity.

Preferably, the transmitter means includes a keypad for the user to insert details of a PIN number. Conveniently, the transmitter means includes a terminal coupled to said memory whereby the transmitter can be coupled to a control means whereby the information in said memory may be changed or supplemented.

The transmitter includes a switch actuatable by the user which results in the stored data being continually transmitted or transmitted in bursts during the transmitting actuation.

Conveniently, the receiver may be coupled to a modem or the like over the telephone network to a central data processing and storage unit where details of the transactions are allocated to the user's account for subsequent billing.

Alternatively, the receiver may include disk storage means or other suitable mass storage for storing validated transactions for subsequent despatching of the stored transaction data to the central data processing and storage unit at a later date.

Conveniently, the receiver includes a display for displaying to the vendor the transmitted information. Advantageously, the receiver includes parity and code check means for rectifying the correctness of the received code prior to transmitting it to the modem.

Preferably, the transmitter unit includes a keypad for the user to insert details of a personal identification number (PIN), said data being transmitted only if the correct PIN number is keyed in.

Conveniently, the transmitter includes a terminal coupled to the memory whereby the transmitter can be coupled to a control means to change the information in said memory.

Preferably also, the transmitter includes a plurality of keys representative of different user accounts and the user can nominate which account a transaction is to be attributed to be selecting the appropriate key.

Preferably, the transmitter is an infra-red transmitter.

Alternatively, the transmitter may include a remote telephone console interfaced to said memory and keys whereby a user may remotely conduct a transaction using radio frequency communications or any part of the electro-magnetic spectrum for communications.

Preferably, the receiver is coupled to a card swipe machine. Conveniently, the receiver and/or card swipe machine are coupled to a cellular telephone network for receiving said data by radio frequency communication. Conveniently, the receiver may be coupled by a modem or the like over the telephone network to a central data processing and storage unit where details of the transactions are allocated to the user's account for subsequent billing.

Alternatively, the receiver may include disk storage means or other suitable storage means for storing validated transactions for subsequent despatching of the stored transaction data to the central data processing and storage unit at a later date.

Thus, the invention provides a considerable improvement over existing cash cards to satisfy requirements for cashless transactions. The invention permits cashless transactions to be performed in a non-contacting fashion and it provides a secure method of checking and verifying the identity of the vendee without requiring signatures.

These and other aspects of the present invention will become apparent from the following description when taken in combination with the accompanying drawings in which:-
Fig. 1 is a diagrammatic view of a system consisting of a transmitter and a receiver shown coupled to a card swipe machine in accordance with one aspect of the present invention;
Fig. 2 is a diagrammatic view of an alternative transmitter similar to that shown in Fig. 1 and which includes a keyboard and a set of credit card select buttons;
Fig. 3a and 3b are schematic block diagrams of the transmitter and receiver, respectively shown in Fig. 1;
Fig. 4 is a schematic block diagram of the transmitter shown in Fig. 2;
Fig 5 is a schematic block diagram of an alternative transmitter similar to that of Figs. 1 and 2, but which has no keypad;
Fig. 6 depicts a flow chart of the operation of the transmitter and receiver conducted by a user in the pursuit of purchasing a commodity using the transmitter and receiver shown in Fig. 1;
Fig. 7 and Fig. 8 depict flow charts which are similar to Fig. 6, but using the transmitters of Fig 2 and Fig. 3 respectively, and
Fig. 9 is a circuit diagram of an embodiment of an infra-red transmitter in accordance with the present invention.

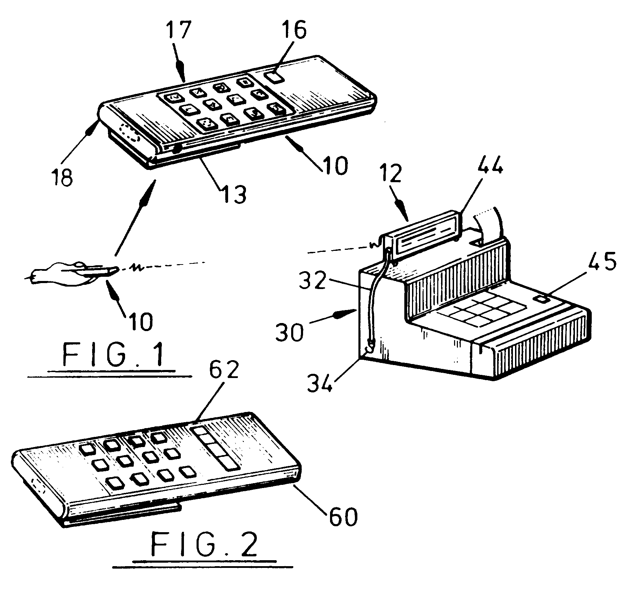

Reference is first made to Fig. 1 of the drawings which depicts a hand-held transmitter 10 and receiver 12 in accordance with the first embodiment of the invention. As will be later described in detail, the transmitter 10, when actuated, transmits information about the user which is received by the receiver 12 and used to initiate the transaction. The transmitter is about 10cm long and has a clip 13 for securing in a pocket or the like. The transmitter has a switch 16 and an infra-red filter 18 at one end of the transmitter. The transmitter also has a keypad 17 which enables high value transactions to be carried out by combining the stored credit card or account number with a personal identification number (PIN).

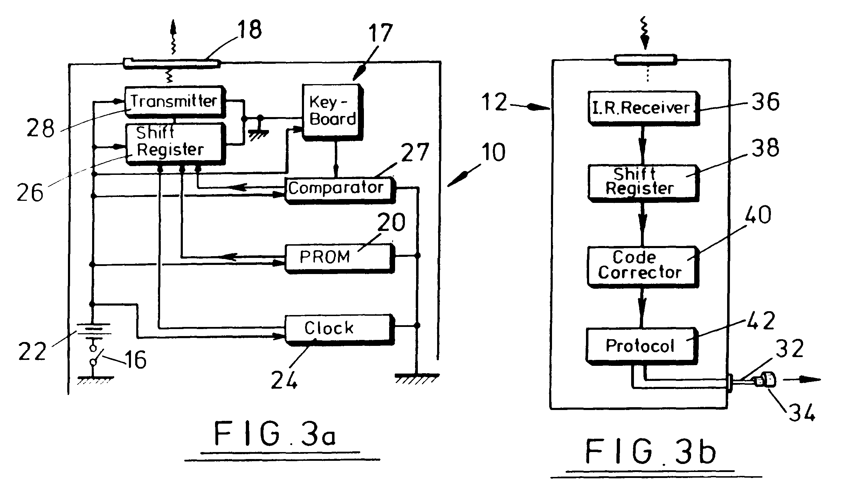

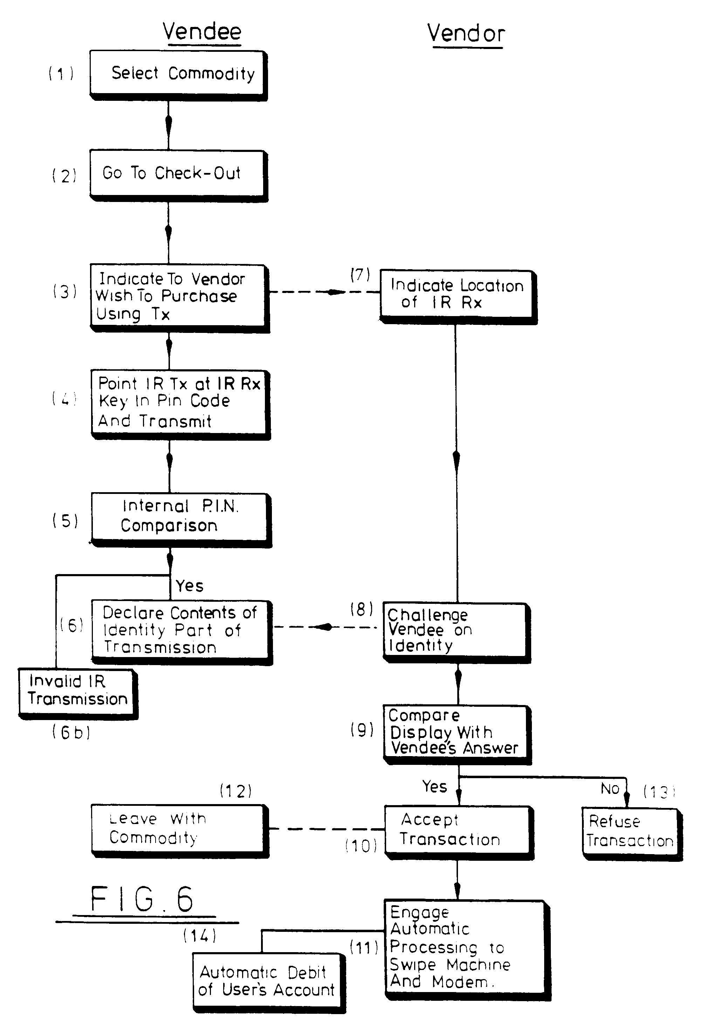

Reference is also made to Fig. 3a, 3b and Fig. 6 of the drawings which are a schematic block diagram of the transmitter and receiver circuits and a flow chart of the operations involved in a transaction using the transmitter/ receiver arrangement of Fig. 1. The transmitter 10 contains a programmable read only memory (PROM) chip 20 in which the owner's personal credit number (i.e. similar to a credit card number or bank number etc.) is electronically stored. The owner's name or other identifying number such as vehicle registration number or community charge number, is also stored. When the switch 16 is depressed, power is applied to the circuit from the battery 22 and the information contained in the PROM 20 is only transferred in parallel using the clock 24, to the shift register 26 only if the correct PIN number is inserted via the keypad 17. The keyed-in PIN number is compared in comparator 27 with the fused PIN number, and only if they match is the information transferred to shift register 26. The identity part of the fused data, for example, the vendee's name or community charge number or driving licence number, can be checked as previously mentioned. This further improves the security as the PIN number is known only to the user and will provide at least the same level of security as with a bank charge card for use with High Street terminals and the like. The information received in the shift register 26 is then transferred to the infra-red transmitter 28, in serial form, and clocked by the clock 24 for transmission. The infra-red filter 18 is a notch filter selected to best suit infra-red transmission.

Thus, in practice, the vendee or user can transfer his personal credit details in a non-contacting, remote fashion in the infra-red waveband. Of course, it will be appreciated that transmission might be in any suitable part of the electro-magnetic spectrum, not necessarily at infra-red wavelengths.

The transmitted data is received by the receiver 12 which is coupled to a conventional card swipe machine 30 by a cable and connector 32,34 respectively. As best seen from the receiver schematic block diagram in Fig. 3b, the data is received by a suitable infra-red receiver 36 in serial form and the receiver then assembles the data into parallel format for the shift register 38. The parallel data is checked for parity in the code corrector 40 and any precoded format of data using a protocol circuit 42 prior to being transferred to the card swipe machine 30.

Thus, the information in the transmitter is passed from the transmitter to the receiver and then to the card swipe machine without contact or from suffering from the aforementioned disadvantages.

The operation of the system in a cashless transaction is best described with reference to the flow chart shown in Fig. 6 of the drawings. The receiver 12 on the card swipe machine has a display panel 44 which displays the contents of the identity part of the message, for example, the name of the user or vendee once the transmission is complete. Provided that the display panel 44 is out of sight of the vendee, the vendor can read the identity part of the message and verify with the vendee as to the contents of this part of the message, as shown in step 8 of Fig. 6. Assuming that the vendee is the owner of the transmitter, only he knows the detail of the identity part of the message and can give the correct answer. This can be readily checked by the vendor by simply comparing the answer with that displayed on the panel; step 9. If the vendor is satisfied of the user's identity, he then authorises the transaction to proceed by actuating a button 45 on the card swipe machine which accepts the user's transmitted data; step 10. Of course, if the vendee is not the owner of the transmitter, then the vendor can terminate the transaction, step 13. If, in fact,the vendee is not the owner of the transmitter, then only access to sophisticated electronic equipment would be required to interrogate the transmitter to enable misuse of the transmitter. Although this is, in theory, possible it is most unlikely that this facility would be available to criminals to carry out widespread fraud and the security achieved is far superior to that of comparing signatures.

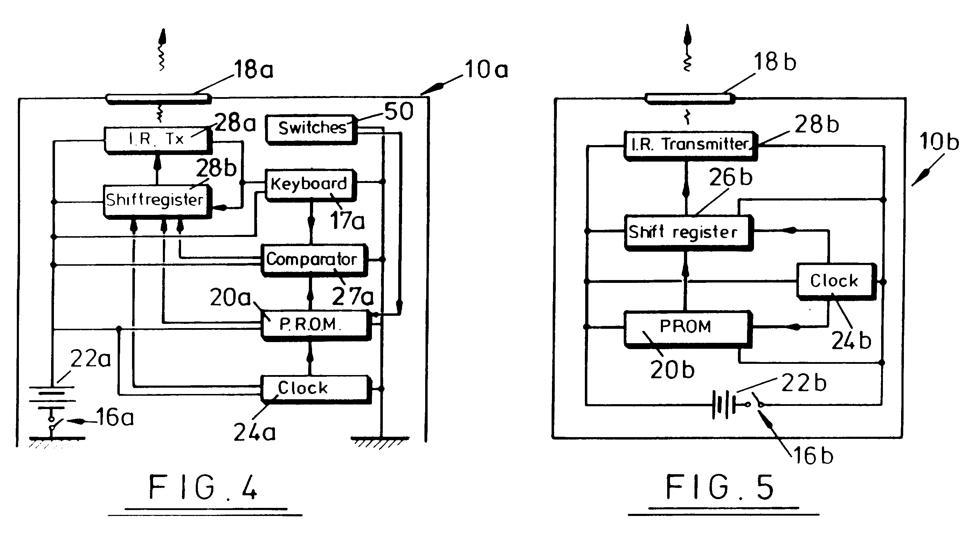

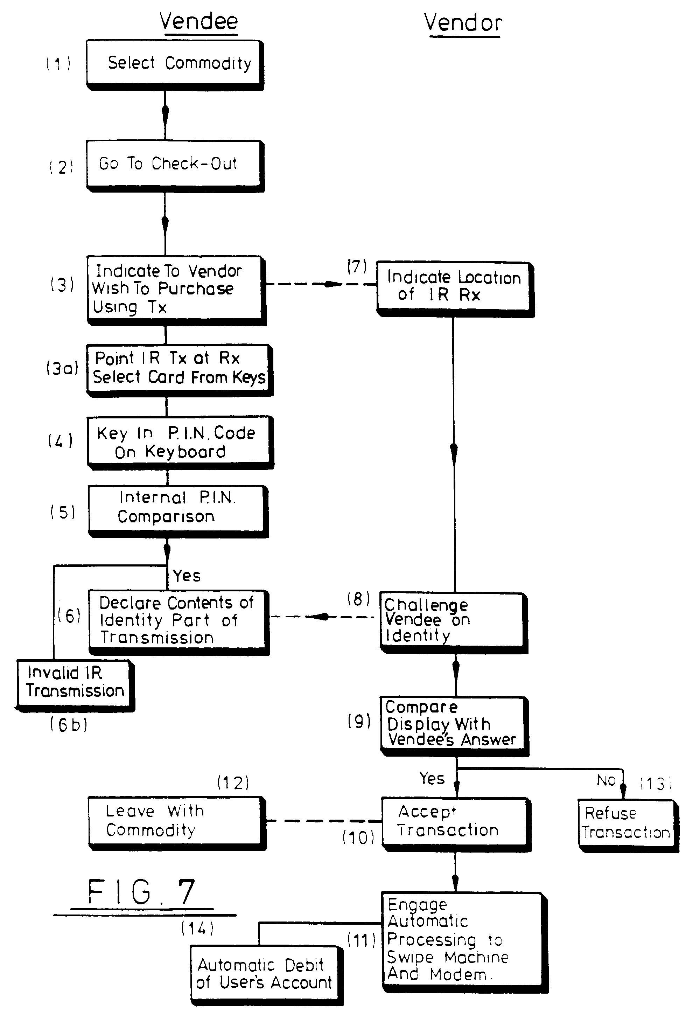

Reference is now made to Figs, 2, 4 and 7 of the accompanying drawings which describe a further embodiment of the invention. The transmitter 10a shown in Fig. 2 is similar to that shown in Fig. 1 in which like numerals denote like parts, but with the suffix 'a' added and which includes a facility for using the transmitter 10a with more than one credit card. This is achieved by providing a set of card select buttons 50, each of which can be selected by the user (step 3a, Fig. 7) in order to designate a particular transaction to a particular credit card. In this case, the individual owns several credit cards and wishes to have one transmitter to operate on behalf of all of the credit cards. Each card select button allows the operator to select the credit card which he wishes to use to complete the transaction. As shown in Fig. 4, the switches 50 are coupled to the PROM 20a and to the other components which contain the details appropriate to the card selected. Once the particular button has been depressed, the operation of the device is identical to that described with reference to Fig. 1.

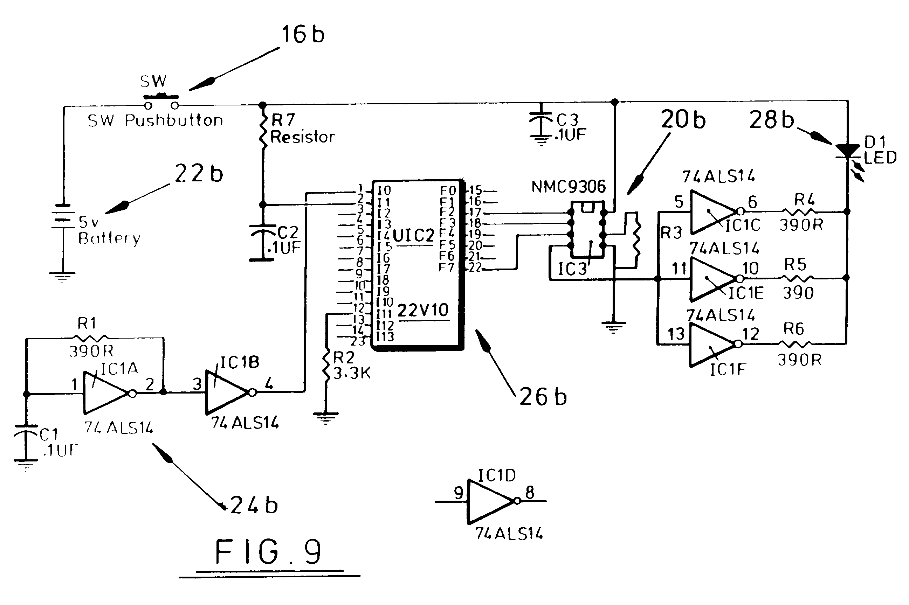

The device can be used for low value transactions such as paying parking charges, paying tolls and the like and as security codes are regularly updated any loss and unauthorised use is likely to be insignificant.
Moreover, the transaction is likely to be fully mechanised for the vendor. Reference is now made to Fig. 5 of the accompanying drawings which are for a transmitter of generally similar size and shape to the transmitter 10 shown in Fig. 1 except that it does not have a key-pad. The circuit elements in Fig. 5 are referred to by like numerals, but by suffix 'b' added and operate in the same way. From Fig. 5 it will be seen that the basic operation is similar to the transmitter of Fig. 1 except that a PIN number is not employed. An example of how this circuit might be implemented is shown in Fig. 9. It comprises electronic elements where each and every one form part of the industry standard. ICs 1A and B might be a 74ALS14 or any suitable package containing 6 Schmitt trigger invertors; IC 2 is a 22V10 or any similar Programmable Array Logic configured to drive IC 3, an NMC9306, a 512-bit programmable serial read only memory. The resistors and capacitors are 1/4 watt, 5 percent tolerance components; a nominal 6 volt battery is employed. The light emitting diode D1 is similar to those used in television channel changers. The user's credit card number and the encryption element are fused in IC 3. These data are configured in an auto-clocking code, a 3 from 9 code being an example, ready for transmission. Implementation might also employ micro-processors/micro-controllers to reduce the component count within the transmitter. There are many such devices available, an example being COP8720C, or a COP424C with an accompanying NMC9306.

The receiver might be configured round a bar-code reader. One example is the Hewlett-Packard HBCR8500 which contains all the necessary electronics to convert the data from the transmitter to ASCll, an international standard compatible with the majority of peripherals and swipe card machines.

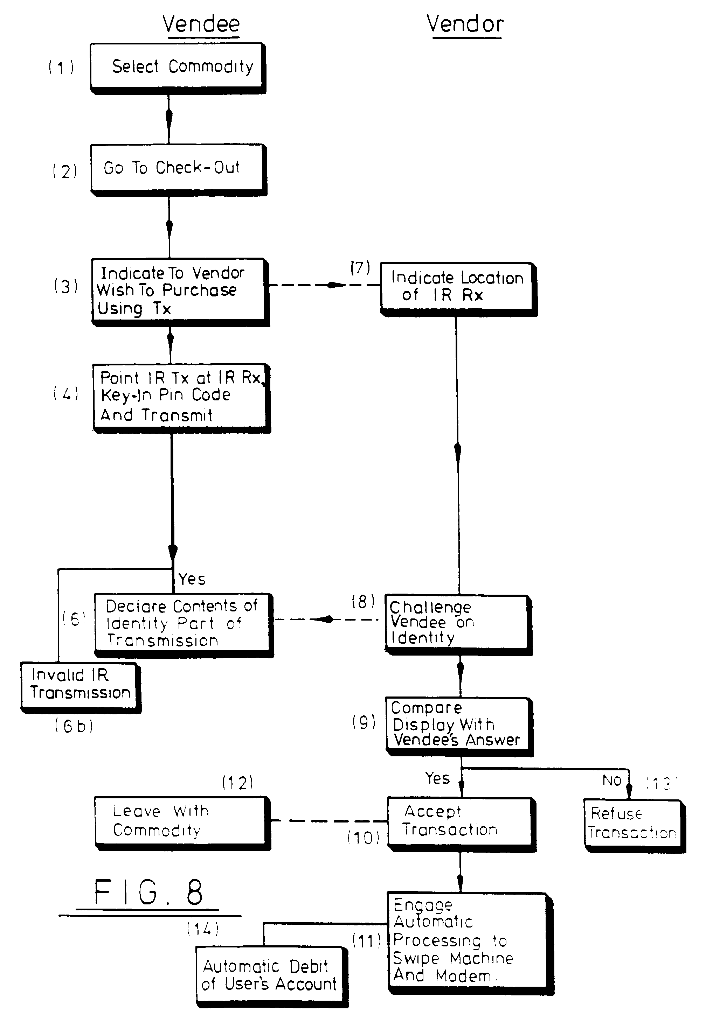

Reference is now made to Figs. 5 and 8 of the accompanying drawings which are for a transmitter generally similar in size and shape to the transmitter 10 shown in Fig. 1 except that it does not have a keypad. The circuit elements in Fig. 5 are referred to by like numerals,but with the suffix 'b' added and operate in the same way. From Figs. 5 and 8 it will be seen that the basic operation is similar to the transmitter of Fig. 1 except that a PIN number is not entered, that is, step 5 is omitted. This device can be used for low value transactions such as paying parking charges, paying tolls and the like and as the security codes are regularly updated any loss and unauthorised use is likely to be insignificant.

It will be appreciated that various modifications may be made to the embodiments hereinbefore described without departing from the scope of the invention as defined in the appended claims. For example, two chips may be combined in a transmitter; one chip containing the user's credit information, PIN number and the like, and a second chip containing an encryption algorithm so that the data transmitted is encrypted for more secure communications. Each receiver would have a corresponding chip with a decryption algorithm so that the transmitted information can be decoded and the stored information displayed to the vendor. The size and shape of the transmitter may be varied and, in fact, depending on manufacturing technology, the transmitter may be credit card shaped to fit in a wallet or the like. The transmitter on such a credit card shape could also contain a keycard and credit card selector keys. The device and system could be used other than for financial transactions; it could be used to control entry or access to secure areas and the like, with the user's code (PIN) being verified at a local or central location.

The communication medium could be radio frequency (r.f.) sound or ultrasound suitable for carrying the necessary information to initiate a transaction, although it is believed that infra-red is the most suitable. A further modification is the addition of r.f. circuits to the transmitter and receiver so that the user is able to complete transactions remotely, in a similar manner to the operation of cardless cellular telephones. Thus, cinema theatre tickets and the like, could be ordered using the transmitter, and shopping could be done remotely with the receiver processing the order and automatically debiting the user's account.

The principal advantage of the invention is that it improves the security of cashless transactions and allows the transactions to be completed in a non-contacting fashion. Furthermore, it provides a more secure method of checking identity of the user without requiring signatures. In addition, a single transmitter can be used to complete transactions for various cards and the transactions can be performed for purchasing any type of goods or service, including parking, paying tolls and the like which is not hitherto been possible with existing credit cards.

## Claims

1. A non-contacting transaction system comprising;
a transmitter unit (10, 10a, 10b) having a memory (20, 20a, 20b) for storage of data identifying the user therein, and a transmitter (28, 28a, 28b) for transmitting the stored data to a remote location upon actuation of the transmitter unit by the user; and
receiver means (12) for receiving the transmitted data and also having indicator means (44) for indicating that the data transmitted is received and that the transaction can proceed,
characterised in that the transmitter unit (10, 10a, 10b) has no receiver to receive data from a remote location whereby the transmitter unit only transmits data to the receiver means (12) and the receiver means (12) has no transmitter for transmitting data to the transmitter unit.

2. A system as claimed in claim 1, wherein the transmitter unit (10, 10a) includes a keypad (17, 17a) for the user to insert a PIN number.

3. A system as claimed in claim 1 or claim 2, wherein the transmitter unit includes a terminal coupled to said memory whereby the transmitter can be coupled to a control means whereby the information in said memory is alterable.

4. A system as claimed in any preceding claim, wherein the transmitter unit (10) includes a switch (16) actuatable by the user to continually transmit, or transmit in bursts, the stored data during the switch actuation.

5. A system as claimed in any preceding claim, wherein the receiver means (12) is coupled by a modem or the like over the telephone network to a central data processing and storage unit where details of the transactions are allocated to the user's account for subsequent billing.

6. A system as claimed in any one of claims 1 to 4, wherein the receiver means (12) includes disk storage means or other suitable mass storage means for storing validated transactions for subsequent despatching of the stored transaction data to the central data processing and storage unit at a later date.

7. A system as claimed in any preceding claim, wherein said receiver means (12) includes a display (44) for displaying to a vendor the transmitted information.

8. A system as claimed in any preceding claim, wherein the receiver means (12) includes parity and code check means for rectifying errors in received data.

9. A system as claimed in any one of the preceding claims, wherein the transmitter is coupled to the memory for wireless transmission of said stored data to a remote location, and a switch (16) actuatable by the user for causing said stored data to be transmitted.

10. A system as claimed in claim 9, wherein the transmitter unit includes a keypad (17) for the user to insert details of a personal identification number PIN, said data being transmitted only if the correct PIN number is keyed in.

11. A system as claimed in claim 9 or 10, wherein the transmitter includes a terminal coupled to the memory whereby the transmitter can be coupled to a control means to change the information in said memory.

12. A system as claimed in any one of claims 9 to 11, wherein the transmitter unit includes a plurality of keys representative of different user accounts and the user can nominate which account a transaction is to be attributed to by selecting the appropriate key.

13. A system as claimed in any one of claims 9 to 12, wherein the transmitter is an infra-red transmitter.

14. A system as claimed in claim 10 or any one of claims 11 to 13 when appended to claim 10, and comprising a remote telephone console interfaced to said memory and keypad (17) to enable a user to remotely conduct a transaction using radio frequency communications or any part of the electro-magnetic spectrum for communications.

15. A system as claimed in any one of the preceding claims, wherein said receiver means comprises a data receiver for receiving a wireless transmission, indicator means for indicating that the data has been received, means for processing the received data for display, means for verifying the correctness of the data received, and display means (44) for displaying to a vendor details of the user stored in said transmitter.

16. A system as claimed in claim 14 or 15, wherein the receiver is coupled to a card swipe machine.

17. A system as claimed in claim 15 or 16, wherein the receiver and/or card swipe machine are coupled to a cellular telephone network for receiving said data by radio frequency communication.

18. A system as claimed in any one of claims 14 to 17, wherein the receiver is coupled by a modem or the like over the telephone network to a central data processing and storage unit where details of the transactions are allocated to the user's account for subsequent billing.

19. A system as claimed in any one of claims 14 to 17, wherein the receiver means includes disk storage means or other suitable storage means for storing validated transactions for subsequent despatching of the stored transaction data to a central data processing and storage unit at a later date.

## Patentansprüche

1. Kontaktloses Transaktionssystem, das aufweist: eine Sendeanlage (10, 10a, 10b) mit einem Speicher (20, 20a, 20b) für das Speichern der Daten, die den Benutzer identifizieren, und einen Sender (28, 28a, 28b) für das Übertragen der gespeicherten Daten zu einem entfernten Ort bei Betätigung der Sendeanlage durch den Benutzer; und
eine Empfangseinrichtung (12) für das Empfangen der übertragenen Daten, die ebenfalls eine Anzeigeeinrichtung (44) aufweist, um anzuzeigen, daß die übertragenen Daten empfangen werden, und daß die Transaktion fortgesetzt werden kann;
dadurch gekennzeichnet, daß die Sendeanlage (10, 10a, 10b) keinen Empfänger besitzt, um die Daten von einem entfernten Ort zu empfangen, wodurch die Sendeanlage nur Daten zur Empfangseinrichtung (12) überträgt, und die Empfangseinrichtung (12) keinen Sender für das Übertragen von Daten zur Sendeanlage besitzt.

2. System nach Anspruch 1, bei dem die Sendeanlage (10, 10a) eine Tastatur (17, 17a) umfaßt, damit der Benutzer eine PIN-Nummer eingeben kann.

3. System nach Anspruch 1 oder Anspruch 2, bei dem die Sendeanlage ein Endgerät umfaßt, das mit dem Speicher gekoppelt ist, wodurch der Sender mit einer Steuereinrichtung gekoppelt werden kann, wodurch die Information im Speicher verändert werden kann.

4. System nach einem der vorhergehenden Ansprüche, bei dem die Sendeanlage (10) einen Schalter (16) umfaßt, der vom Benutzer betätigt werden kann, um die gespeicherten Daten während der Betätigung des Schalters kontinuierlich oder stoßweise zu übertragen.

5. System nach einem der vorhergehenden Ansprüche, bei dem die Empfangseinrichtung (12) durch ein Modem oder dergleichen über das Telefonnetz mit einer zentralen Datenverarbeitungs- und Speicheranlage gekoppelt ist, wo Details der Transaktionen dem Konto des Benutzers für eine anschließende Fakturierung zugeordnet werden.

6. System nach einem der Ansprüche 1 bis 4, bei dem die Empfangseinrichtung (12) eine Plattenspeichereinrichtung oder eine andere geeignete Massenspeichereinrichtung für das Speichern von bestätigten Transaktionen für das anschließende Senden der gespeicherten Transaktionsdaten zur zentralen Datenverarbeitungs- und Speicheranlage zu einem späteren Datum umfaßt.

7. System nach einem der vorhergehenden Ansprüche, bei dem die Empfangseinrichtung (12) ein Display (44) umfaßt, um einem Verkäufer die übertragene Information anzuzeigen.

8. System nach einem der vorhergehenden Ansprüche, bei dem die Empfangseinrichtung (12) eine Paritäts- und Kodekontrolleinrichtung für das Berichtigen von Fehlern in den empfangenen Daten umfaßt.

9. System nach einem der vorhergehenden Ansprüche, bei dem der Sender mit dem Speicher für die drahtlose Übertragung der gespeicherten Daten zu einem entfernten Ort gekoppelt ist, und ein Schalter (16) durch den Benutzer betätigt werden kann, um die Übertragung der gespeicherten Daten zu veranlassen.

10. System nach Anspruch 9, bei dem die Sendeanlage eine Tastatur (17) umfaßt, damit der Benutzer Details einer Personenkennummer PIN eingeben kann, wobei die Daten nur übertragen werden, wenn die richtige PIN-Nummer eingetastet wird.

11. System nach Anspruch 9 oder 10, bei dem der Sender ein Endgerät umfaßt, das mit dem Speicher gekoppelt ist, wodurch der Sender mit einer Steuereinrichtung gekoppelt werden kann, um die Information im Speicher zu verändern.

12. System nach einem der Ansprüche 9 bis 11, bei dem die Sendeanlage eine Vielzahl von Tasten umfaßt, die für die verschiedenen Benutzerkonten repräsentativ sind, und der Benutzer angeben kann, welchem Konto eine Transaktion zugeschrieben werden soll, indem die geeignete Taste ausgewählt wird.

13. System nach einem der Ansprüche 9 bis 12, bei dem der Sender ein Infrarotsender ist.

14. System nach Anspruch 10 oder einem der Ansprüche 11 bis 13, wenn sie ein Anhang zum Anspruch 10 sind, das einen fernbetätigten Telefonsteuerschrank aufweist, der mit dem Speicher und der Tastatur (17) gekoppelt ist, um einen Benutzer in die Lage zu versetzen, eine Transaktion ferngesteuert durchzuführen, indem Hochfrequenzkommunikationen oder ein Teil des elektromagnetischen Spektrums für Kommunikationen benutzt werden.

15. System nach einem der vorhergehenden Ansprüche, bei dem die Empfangseinrichtung aufweist: einen Datenempfänger für das Empfangen einer drahtlosen Übertragung, eine Anzeigeeinrichtung für das Anzeigen, daß die Daten empfangen wurden, eine Einrichtung für das Verarbeiten der empfangenen Daten, um sie anzuzeigen, eine Einrichtung für das Bestätigen der Richtigkeit der empfangenen Daten, und ein Display (44), um einem Verkäufer Details anzuzeigen, die vom Benutzer im Sender gespeichert werden.

16. System nach Anspruch 14 oder 15, bei dem der Empfänger mit einer Kartenwippmaschine gekoppelt ist.

17. System nach Anspruch 15 oder 16, bei dem der Empfänger und/oder die Kartenwippmaschine mit einem Funktelefonnetz für das Empfangen von Daten mittels Hochfrequenzkommunikation gekoppelt sind.

18. System nach einem der Ansprüche 14 bis 17, bei dem der Empfänger mittels eines Modems oder dergleichen über das Telefonnetz mit einer zentralen Datenverarbeitungs- und Speicheranlage gekoppelt ist, wo Details der Transaktionen dem Konto des Benutzers für eine anschließende Fakturierung zugeordnet werden.

19. System nach einem der Ansprüche 14 bis 17, bei dem die Empfangseinrichtung eine Plattenspeichereinrichtung oder eine andere geeignete Speichereinrichtung für das Speichern von bestätigten Transaktionen für das anschließende Senden der gespeicherten Transaktionsdaten zu einer zentralen Datenverarbeitungs- und Speicheranlage zu einem späteren Datum umfaßt.

## Revendications

1. Système de transaction sans contact comprenant:
une unité émettrice (10, 10a, 10b) avec une mémoire (20, 20a, 20b) pour enregistrer des données d'identification de l'utilisateur, et un émetteur (28, 28a, 28b), pour transmettre les données enregistrées vers un emplacement éloigné lors de l'actionnement de l'unité émettrice par l'utilisateur; et
un moyen récepteur (12), pour recevoir les données transmises, et comportant également un moyen indicateur (44) pour indiquer que les données transmises ont été reçues et que la transaction peut se faire,
caractérisé en ce que l'unité émettrice (10, 10a, 10b) ne comporte pas de récepteur pour recevoir les données d'un emplacement éloigné, l'unité émettrice transmettant ainsi uniquement les données au moyen récepteur (12) et le moyen récepteur (12) ne comportant pas d'émetteur pour transmettre les données vers l'unité émettrice.

2. Système selon la revendication 1, dans lequel l'unité émettrice (10, 10a) englobe un clavier (17, 17a) sur lequel l'utilisateur peut entrer un numéro PIN.

3. Système selon les revendications 1 ou 2, dans lequel l'unité émettrice englobe un terminal couplé à ladite mémoire, l'émetteur pouvant ainsi être couplé à un moyen de commande, permettant ainsi la modification des informations dans ladite mémoire.

4. Système selon l'une quelconque des revendications précédentes, dans lequel l'unité émettrice (10) englobe un commutateur (16) pouvant être actionné par l'utilisateur pour transmettre en continu ou pour transmettre par paquets les données enregistrées au cours de l'actionnement du commutateur.

5. Système selon l'une quelconque des revendications précédentes, dans lequel le moyen récepteur (12) est couplé par un modem ou un dispositif similaire par l'intermédiaire du réseau téléphonique à une unité de traitement et de mise en mémoire centrale des données, où les détails des transactions sont affectés au compte de l'utilisateur en vue d'un débit ultérieur.

6. Système selon l'une quelconque des revendications 1 à 4, dans lequel le moyen récepteur (12) englobe un moyen de mémoire à disque ou un autre moyen de mémoire de masse approprié pour enregistrer les transactions validées en vue d'une distribution ultérieure des données de transaction enregistrées vers l'unité de traitement et de mise en mémoire centrale des données, une date ultérieure.

7. Système selon l'une quelconque des revendications précédentes, dans lequel ledit moyen récepteur (12) englobe un affichage (44) pour afficher à l'intention d'un vendeur les informations transmises.

8. Système selon l'une quelconque des revendications précédentes, dans lequel le moyen récepteur (12) englobe un moyen de vérification de la parité et du code, pour rectifier des erreurs dans les données reçues.

9. Système selon l'une quelconque des revendications précédentes, dans lequel l'émetteur est couplé à la mémoire en vue d'une transmission sans fil desdites données enregistrées vers un emplacement éloigné, et comprenant un commutateur (16) pouvant être actionné par l'utilisateur pour entraîner la transmission desdites données enregistrées.

10. Système selon la revendication 9, dans lequel l'unité émettrice englobe un clavier (17) sur lequel l'utilisateur peut entrer les détails d'un numéro d'identification personnel PIN, lesdites données n'étant transmises qu'en cas d'entrée du numéro PIN correct.

11. Système selon les revendications 9 ou 10, dans lequel l'émetteur englobe un terminal couplé à la mémoire, l'émetteur pouvant ainsi être couplé à un moyen de commande pour changer les informations dans ladite mémoire.

12. Système selon l'une quelconque des revendications 9 à 11, dans lequel l'unité émettrice englobe plusieurs touches représentatives de différents comptes de l'utilisateur, l'utilisateur pouvant indiquer le compte sur lequel une transaction doit être affectée en sélectionnant la touche appropriée.

13. Système selon l'une quelconque des revendications 9 à 12, dans lequel l'émetteur est un émetteur à infrarouge.

14. Système selon le la revendication 10 ou l'une quelconque des revendications 11 à 13, dépendant de la revendication 10, et comprenant une console téléphonique à distance reliée à ladite mémoire et audit clavier (17), pour permettre à un utilisateur de faire une transaction à distance en utilisant les communications haute fréquence ou une quelconque partie du spectre électromagnétique pour les communications.

15. Système selon l'une quelconque des revendications précédentes, dans lequel ledit moyen récepteur comprend un récepteur de données pour recevoir une transmission sans fil, un moyen indicateur pour indiquer que les données ont été reçues, un moyen pour traiter les données reçues en vue de leur affichage, un moyen pour vérifier l'exactitude des données reçues et un moyen d'affichage (44), pour afficher à l'intention d'un vendeur les détails concernant l'utilisateur, enregistrés dans ledit émetteur.

16. Système selon les revendications 14 ou 15, dans lequel le récepteur est couplé à un dispositif de lecture de carte à glissement.

17. Système selon les revendications 15 ou 16, dans lequel le récepteur et/ou le dispositif de lecture de carte à glissement sont couplés à un réseau téléphonique cellulaire pour recevoir lesdites données par communication haute fréquence.

18. Système selon l'une quelconque des revendications 14 à 17, dans lequel le récepteur est couplé par un modem ou un dispositif similaire par l'intermédiaire du réseau téléphonique à une unité de traitement et de mise en mémoire centrale des données, où les détails concernant les transactions sont affectés au compte de l'utilisateur en vue d'un débit ultérieur.

19. Système selon l'une quelconque des revendications 14 à 17, dans lequel le moyen récepteur englobe un moyen de mémoire à disque ou un autre moyen de mémoire approprié pour enregistrer les transactions validées en vue d'une distribution ultérieure des données de transaction enregistrées vers une unité de traitement et de mise en mémoire centrale des données, à une date ultérieure.
